# EUROPÄISCHE PATENTSCHRIFT

(11) **EP 1 621 394 B1**
(45) Veröffentlichungstag und Bekanntmachung des Hinweises auf die Patenterteilung: **31.10.2007**
(21) Anmeldenummer: 05008569.5
(22) Anmeldetag: 19.04.2005
(51) Int. Cl.: B60N 2/28

(54) **Kindersitz**
Child seat
Siège pour enfant

(30) Priorität: 29.07.2004 DE 102004036781
(43) Veröffentlichungstag der Anmeldung: 01.02.2006
(73) Patentinhaber: HS Products Engineering GmbH, 82239 Alling (DE)
(72) Erfinder: Ziegenbein, Werner, 81929 München (DE)
(74) Vertreter: Eisenführ, Speiser & Partner

(56) Entgegenhaltungen:
- EP-A- 1 247 704
- EP-A- 1 468 868
- EP-A- 1 552 993
- WO-A-20/05058635
- FR-A- 2 814 994
- US-A1- 2002 043 830

## Beschreibung

Die Erfindung betrifft einen Kindersitz für ein Kraftfahrzeug nach dem Oberbegriff des Patentanspruches 1.

Ein derartiger aus FR 2 814 994 A bekannter Kindersitz wird mit einem oberen Haltegurt (Top.Tether), der einen Haken aufweist, mit einem fahrzeugfesten Haltepunkt, welche als Verankerungsöse ausgebildet ist, in Eingriff gebracht. Hierdurch soll bei einer starken Abbremsung des Fahrzeugs oder bei einem Unfall ein Nachvornekippen des Kindersitzes verhindert werden. Der fahrzeugfeste Haltepunkt kann im Bereich der Hutablage oder im Bodenbereich des Fahrzeugs, beispielsweise im Kofferraum vorgesehen sein. Insbesondere bei sogenannten Isofix-Kindersitzen kommt ein derartiger oberer Haltegurt (Top Tether) zum Einsatz.

Derartige Kindersitze werden am Fahrzeugsitz, insbesondere an der Rückbank des Fahrzeugs, durch Steckverbindungen mit dem Fahrzeugaufbau fest verbunden. Diese Steckverbindungen befinden sich in dem Winkel, in welchem die Rückenlehne und die Sitzfläche des Fahrzeugsitzes, insbesondere der Rückbank zusammenlaufen. Durch die Steckverbindungen wird eine feste Verbindung zwischen dem Kindersitz, welcher als Vorwärts-Sitz ausgebildet ist, und dem Auto hergestellt.

Aus EP 1 247 704 A ist es bekannt, mit Hilfe eines Dreipunkt-Sicherheitsgurtes, welcher normalerweise zum Angurten eines Fahrzeuginsassen im Fahrzeug dient, auch einen Kindersitz am Fahrzeugsitz zu befestigen. Am fahrzeugfesten Verankerungspunkt für den Beckengurtbereich des Sicherheitsgurtes ist eine Anzeigeeinrichtung vorgesehen, mit welcher eine ausreichende Zugspannung beim Befestigen des Kindersitzes am Fahrzeugsitz angezeigt wird.

Aufgabe der Erfindung ist es, einen Kindersitz der eingangs genannten Art zu schaffen, bei welchem die Sicherheit gegen ein Nachvornekippen des Kindersitzes bei einem Unfall oder einer starken Bremsverzögerung des Fahrzeugs ohne zusätzlichen Raumbedarf verbessert ist.

Diese Aufgabe wird erfindungsgemäß durch die kennzeichnenden Merkmale des Patentanspruches 1 gelöst.

Bei der Erfindung ist am Haken eine Anzeigeeinrichtung vorgesehen, welche anzeigt, dass der Haken mit Zugspannung am fahrzeugfesten Haltepunkt eingreift. Hierdurch ist gewährleistet, dass der vorwärts gerichtete Kindersitz (Vorwärts-Kindersitz) mit seiner Rückenlehne fest an der Rückenlehne des Fahrzeugsitzes oder der Rückbank anliegt. Ein Kippen um die beiden unten liegenden Verankerungspunkte des Kindersitzes bei losem Haltegurt wird hierdurch vermieden. Durch die Anzeigeeinrichtung wird außerdem dem Fahrzeuginsassen angezeigt, dass der Kindersitz kippsicher am Fahrzeugsitz befestigt ist.

Die Anzeigeeinrichtung besitzt einen am Haken gegen eine Vorspannkraft verschiebbar gelagerten Umlenkholm, um den der Haltegurt geschlungen ist. Beim Eingriff des Hakens im fahrzeugfesten Haltepunkt wird der Umlenkholm gegen die insbesondere durch Federkraft hergestellte Vorspannkraft verschoben. Durch diese Verschiebung wird angezeigt, dass der Kindersitz mit einer bestimmten Zugspannung am Fahrzeugsitz gegen ein Verkippen nach vorne befestigt ist. Die Anzeige kann optisch, akustisch oder sonst wie dem Fahrzeuginsassen kenntlich gemacht werden. Vorzugsweise kommt eine Farbmarkierung zum Einsatz, welche beim Verschieben des Umlenkholms infolge der erforderlichen Zugkraft, die am Haltegurt wirkt, freigelegt wird. Die Farbmarkierung mit beispielsweise grüner Farbe wird bei der Verschiebung des Umlenkholms am Haken freigelegt. Ferner kann eine zweite Farbmarkierung, beispielsweise mit roter Farbe am Haken vorgesehen sein, welche dann freiliegt, wenn auf den Haltegurt nicht die erforderliche Zugspannung einwirkt, die die gewünschte Kippsicherheit gewährleistet oder bei nicht eingehängtem Haltegurt freiliegt.

Ferner kann mit Hilfe einer Sensoreinrichtung, die am Haltegurt wirkende Zugspannung gemessen werden. Hierzu kann eine reine Kraftmessung, beispielsweise mit Hilfe wenigstens eines piezoelektrischen Sensors vorgesehen sein. Ferner kann die Verschiebebewegung des Umlenkholms, welche proportional der Zugspannung ist, mit Hilfe einer geeigneten Sensoreinrichtung, beispielsweise eines Magnetsensors, der die bei der Bewegung sich ändernde Magnetfeldstärke erfasst, bestimmt werden. Bei Erreichen der für die Kippsicherheit des Kindersitzes erforderlichen Zugspannung kann ein entsprechendes Signal, welches optisch, akustisch oder sonst wie sein kann, dem Fahrzeuginsassen die funktionsgerechte Befestigung des Kindersitzes anzeigen.

Die Erfindung kommt vorzugsweise bei einem sogenannten Isofix-Kindersitz, welcher als Vorwärts-Kindersitz ausgebildet ist, zum Einsatz.

Anhand der Figuren wird die Erfindung noch näher erläutert.

Es zeigt
- Fig. 1: in perspektivischer Darstellung einen Vorwärts-Kindersitz, bei dem die Erfindung zur Anwendung kommen kann;
- Fig. 2: die Oberseite des Hakens, mit welchem der obere Haltegurt (Top Tether) am fahrzeugfesten Haltepunkt verankert werden kann, in einem vom Haltepunkt gelösten Zustand;
- Fig. 3: in perspektivischer Darstellung ebenfalls die Oberseite des Hakens der Fig. 2 in am fahrzeugfesten Haltepunkt verankertem Zustand;
- Fig. 4: in perspektivischer Darstellung die Unterseite des Hakens der Fig. 2 und 3 in mit dem fahrzeugfesten Haltepunkt verankertem Zustand; und
- Fig. 5: die Unterseite des Hakens in vom fahrzeugfesten Haltepunkt gelöstem Zustand.

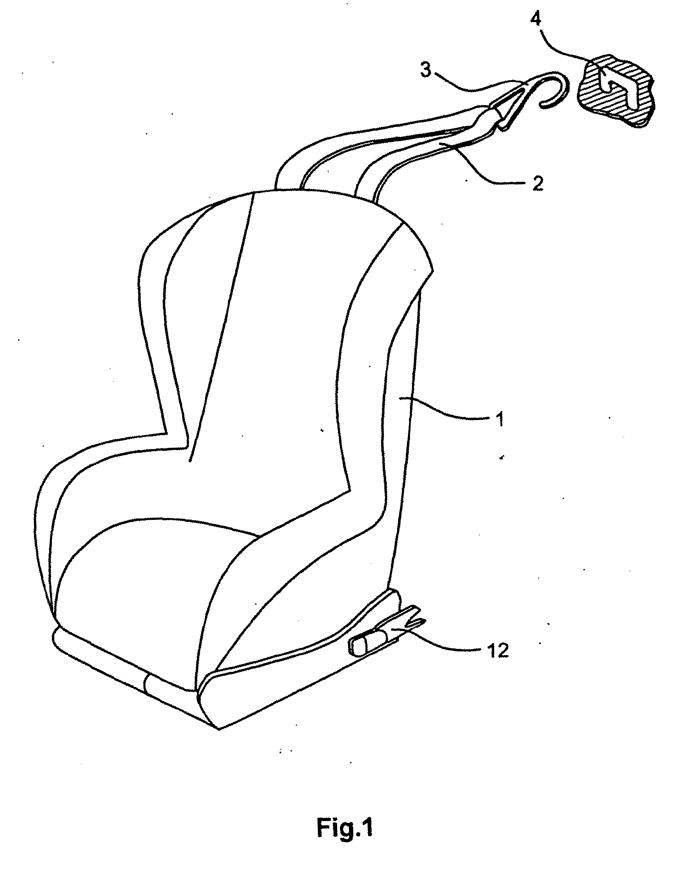

In Fig. 1 ist ein als Vorwärts-Kindersitz ausgebildeter Kindersitz 1 schematisch dargestellt, bei welchem die Erfindung zum Einsatz kommen kann. Der Kindersitz 1 kann, wie bei einem herkömmlichen Isofix-System, mit Hilfe von zwei seitlich unten am Kindersitz 1 vorgesehenen Greifarmen 12, welche an entsprechenden fahrzeugfesten Haltepunkten eingerastet werden können, am Fahrzeugsitz befestigt werden. Hierdurch wird eine feste Verbindung mit dem Fahrzeugaufbau hergestellt. Mit einem oberen Haltegurt (Top Tether) 2, der einen Haken 3 aufweist, wird der Kindersitz an einem weiteren fahrzeugfesten Haltepunkt 4 in Form einer Verankerungsöse befestigt. Der fahrzeugfeste Haltepunkt 4 kann am Boden des Fahrzeugs, beispielsweise im Bereich des Kofferraums oder im Bereich der Hutablage des Fahrzeugs vorgesehen sein.

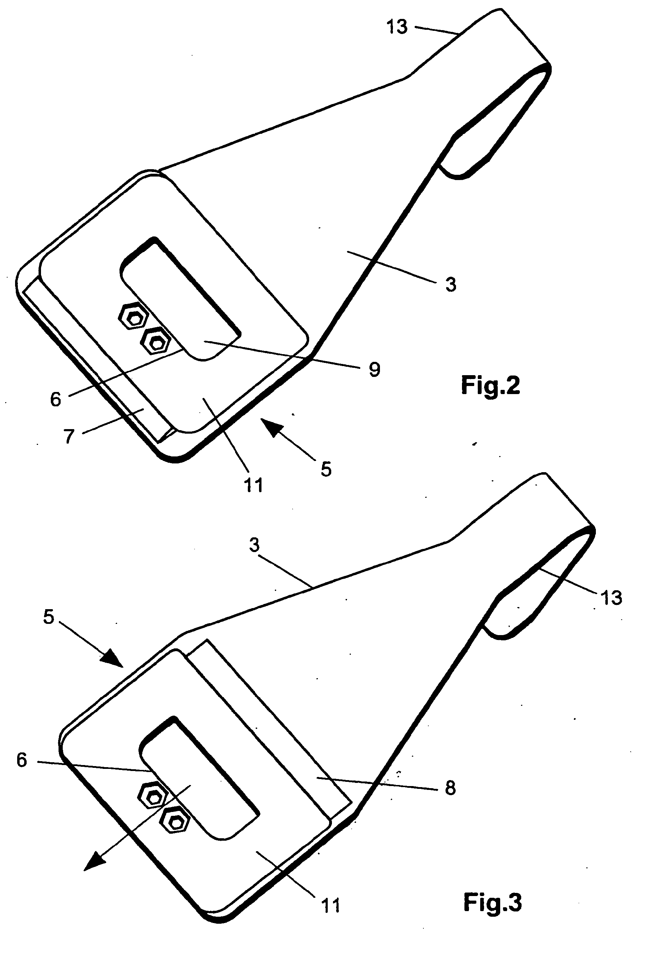

Gemäß der Erfindung ist der Kindersitz derart ausgestaltet, dass durch eine Anzeigeeinrichtung 5 kenntlich gemacht wird, wenn der Kindersitz mit einer bestimmten Zugspannung, die am Haltegurt 2 wirkt, am fahrzeugfesten Haltepunkt 4 verankert ist. Die Anzeigeeinrichtung 5 ist am Haken 3 vorgesehen. In den Fig. 2 bis 5 ist ein Ausführungsbeispiel der Anzeigeeinrichtung dargestellt.

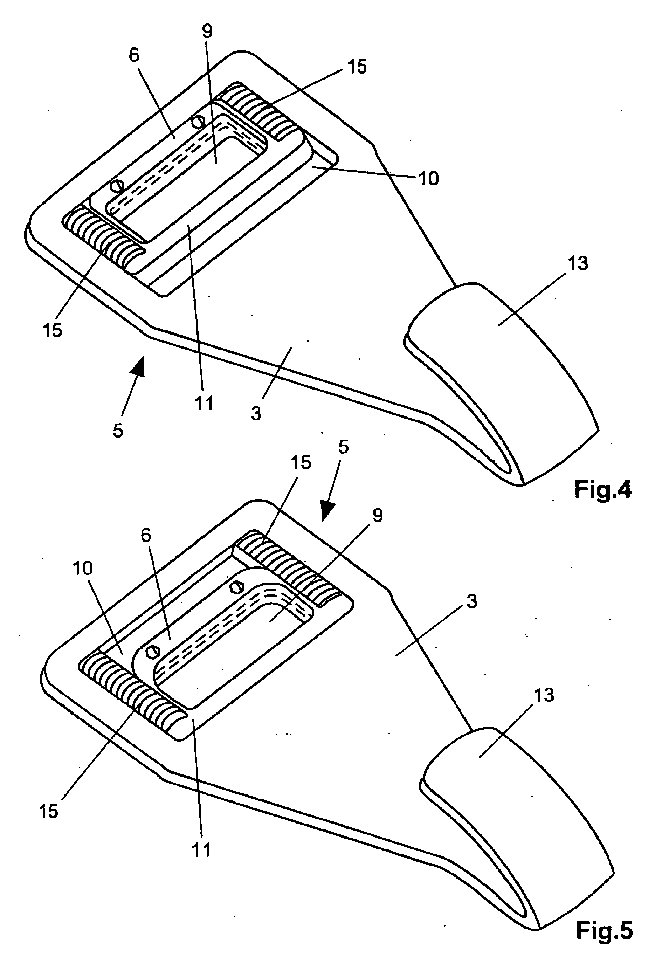

Die Anzeigeeinrichtung 5 befindet sich am Haken 3 und beinhaltet einen verschiebbar am Haken 3 gelagerten Umlenkholm 6. Der Umlenkholm 6 ist Teil einer rahmenförmig ausgebildeten Öse 11, die verschiebbar am Haken 3 gelagert ist. Durch eine Öffnung 9 der im wesentlichen Rechteckform aufweisenden Öse 11 ist der Haltegurt 2, wie in Fig. 1 dargestellt ist, geschlungen und am Haken 3 befestigt. An der Unterseite der Öffnung 9 befindet sich der Umlenkholm 6, um welchen der Haltegurt 2 geschlungen ist und so mit dem Haken 3 verbunden ist. Die Öse 11 ist gegen die Kraft zweier Federn 15, welche als Schraubenfedern ausgebildet sein können, in einer Ausnehmung 10 verschiebbar am Haken 3 gelagert. In den Fig. 1, 2 und 5 ist der vom fahrzeugfesten Haltepunkt 4 lösgelöste Zustand des Hakens 3 dargestellt. Die Öse 11 wird dabei durch die Vorspannkraft, welche von den Federn 15 gebildet wird, in eine obere Ruheposition gedrückt. Dabei liegt die Öse 11 an einer oberen Begrenzungskante der Ausnehmung 10 am Haken 3 an. In den Fig. 3 und 4 ist der Zustand der Anzeigeeinrichtung 5 dargestellt, bei welchem der Haken 3 mit dem fahrzeugfesten Haltepunkt 4 mit einem Einhängeteil 13 in Eingriff gebracht ist. Hierbei wird die Öse 11 sowie der Umlenkholm 6 gegen eine unten liegende Begrenzungskante der Ausnehmung 10 am Haken 3 gegen die Vorspannkraft der Federn 15 gedrückt.

Wenn der Haken 3 vom fahrzeugfesten Haltepunkt 4 gelöst ist oder wenn die am Haltegurt 2 wirkende Zugspannung zu gering ist oder keine Zugspannung am Haltegurt 2 vorhanden ist, befindet sich die Öse 11 der Anzeigeeinrichtung 5 in ihrer oberen in den Fig. 2 und 5 dargestellten Position. Dabei wird an der Oberseite des Hakens 3 eine Farbmarkierung 7 freigelegt, welche beispielsweise eine rote Farbe haben kann.

Wenn der Haken 3 mit seinem Einhängeteil 13 im fahrzeugfesten Haltepunkt 4 verankert ist und am Haltegurt 2 eine ausreichend hohe, die Kippsicherheit des Kindersitzes 1 gewährleistende Zugspannung 14 gegen die Vorspannkraft der Federn 15 vorhanden ist, wird die Öse 11 und damit der Umlenkholm 6 in die untere, in den Fig. 3 und'4 dargestellte Position bewegt. Dabei wird an der Oberseite des Hakens 3 eine Farbmarkierung 8 freigelegt und die Farbmarkierung 7 abgedeckt. Die Farbmarkierung 8 kann beispielsweise eine grüne Farbe haben. Hierdurch wird dem Fahrzeuginsassen kenntlich gemacht, dass der Kindersitz 1 mit der nötigen Kippsicherheit am Fahrzeugsitz befestigt ist.

Beim dargestellten Ausführungsbeispiel sind zwei unterschiedliche Farbmarkierungen vorgesehen, von denen jeweils eine in den beiden Betriebszuständen des Hakens 3 abgedeckt ist und die andere freigelegt ist, wie oben erläutert wurde. Die Farbmarkierung 7 befindet sich dabei an der Unterseite der Ausnehmung 10 und die Farbmarkierung 8 an der Oberseite der Ausnehmung 10 am Haken 3.

Die Vorspannkraft, welche auf die Öse 11 und damit auf den Umlenkholm 6 wirkt, wird beim Ausführungsbeispiel durch seitliche Schraubendruckfedern 15, welche in seitlichen Zwischenräumen zwischen der Öse 4 und den seitlichen Begrenzungen der Ausnehmung 10 vorgesehen sind, erzeugt. Die Vorspannkraft kann auch anderweitig erreicht werden. Hierzu kann beispielsweise zwischen der unteren Begrenzungskante der Ausnehmung 10 und dem Umlenkholm 6 mit Hilfe einer oder mehrerer Federn die Vorspannkraft erzeugt werden.

Anstelle der Farbmarkierungen, welche in Abhängigkeit von der Position der Öse 11 bzw. des Umlenkholmes 6 freigelegt werden, kann auch eine Sensoreinrichtung vorgesehen sein, welche in Abhängigkeit von der am Haltegurt 2 wirkenden Zugkraft und/oder der jeweiligen Position der Öse 11 bzw. des Umlenkholms 6 eine optische, akustische oder eine andere Anzeige bewirkt. Diese Sensoreinrichtung kann beispielsweise am Umlenkholm 6 vorgesehen sein und die Verschiebebewegung des Umlenkholms 6 gegenüber dem Material des Hakens 3 im unteren Bereich der Ausnehmung 10 erfassen. Hierzu kann beispielsweise ein Magnetsensor vorgesehen sein, welcher die Magnetfeldänderung eines im unteren Bereich der Ausnehmung 10 vorhandenen Permanentmagnetfeldes erfasst. Das Permanentmagnetfeld kann beispielsweise durch im unteren Bereich der Ausnehmung 10 am Hakenmaterial befestigte Permanentmagnete erzeugt werden.

### [Bezugszeichenliste]

- 1: Kindersitz
- 2: Haltegurt (Top Tether)
- 3: Haken
- 4: fahrzeugfester Haltepunkt
- 5: Anzeigeeinrichtung
- 6: Umlenkholm
- 7, 8: Farbmarkierungen
- 9: Öffnung
- 10: Ausnehmung
- 11: Öse
- 12: Greifarm
- 13: Einhängeteil
- 14: Zugrichtung
- 15: Federn

## Patentansprüche

1. Kindersitz für ein Kraftfahrzeug mit einem oberen Haltegurt (2), der einen Haken (3) aufweist, welcher mit einem fahrzeugfesten Haltepunkt (4) in Eingriff zu bringen ist, **dadurch gekennzeichnet, dass** am Haken (3) eine Anzeigeeinrichtung (5) vorgesehen ist, welche anzeigt, dass der Haken (3) mit Zugspannung am fahrzeugfesten Haltepunkt (4) eingreift, wobei die Anzeigeeinrichtung (5) einen in einer Ausnehmung (10) des Hakens (5) gegen eine Vorspannkraft verschiebbar gelagerten Umlenkholm (6) aufweist, um den der Haltegurt (2) geschlungen ist, wobei bei Eingriff des Hakens (3) im fahrzeugfesten Haltepunkt (4) der Umlenkholm (6) gegen die Vorspannkraft für eine Anzeige der Zugspannung verschoben ist.

2. Kindersitz nach Anspruch 1,
**dadurch gekennzeichnet, dass** die Anzeigeeinrichtung.(5) eine optische oder akustische Anzeige der Zugspannung vorsieht.

3. Kindersitz nach Anspruch 1,
**dadurch gekennzeichnet, dass** die Anzeigeeinrichtung (5) wenigstens eine Farbmarkierung (7, 8) aufweist.

4. Kindersitz nach Anspruch 1,
**dadurch gekennzeichnet, dass** die Zugspannung durch eine Sensoreinrichtung erfasst und angezeigt ist.

5. Kindersitz nach einem der Ansprüche 1 bis 4,
**dadurch gekennzeichnet, dass** die Vorspannkraft, welche auf den Umlenkholm (6) wirkt, durch Federkraft gebildet ist.

6. Kindersitz nach einem der Ansprüche 1 bis 5,
**dadurch gekennzeichnet, dass** die Vorspannkraft, welche auf den Umlenkholm (6) wirkt, im wesentlichen entgegengesetzt zur Zugspannung gerichtet ist

7. Kindersitz nach einem der Ansprüche 1 bis 6,
**dadurch gekennzeichnet, dass** der Umlenkholm (6) eine Öffnung (9) am Haken (3) begrenzt.

8. Kindersitz nach einem der Ansprüche 1 bis 7,
**dadurch gekennzeichnet, dass** der Umlenkholm (6) Teil einer am Haken (3) verschiebbar gelagerten Öse (11) ist, durch welche der obere Haltegurt (2) geführt ist.

## Claims

1. A child seat for a motor vehicle comprising an upper restraining belt (2) having a hook (3) which is to be brought into engagement with a securing point (4) which is fixed with respect to the vehicle, **characterised in that** provided on the hook (3) is an indicator device (5) which indicates that the hook (3) engages with tensile stress on the securing point (4) which is fixed with respect to the vehicle, wherein the indicator device (5) has a deflection bar (6) which is supported displaceably against a biasing force in an opening (10) in the hook (3) and around which the restraining belt (2) is passed, wherein upon engagement of the hook (3) in the securing point (4) which is fixed with respect to the vehicle the deflection bar (6) is displaced against the biasing force for a display of the tensile stress.

2. A child seat according to claim 1 **characterised in that** the indicator device (5) provides an optical or acoustic display of the tensile stress.

3. A child seat according to claim 1 **characterised in that** the indicator device (5) has at least one colour marking (7, 8).

4. A child seat according to claim 1 **characterised in that** the tensile stress is detected and displayed by a sensor device.

5. A child seat according to one of claims 1 to 4 **characterised in that** the biasing force which acts on the deflection bar (6) is formed by spring force.

6. A child seat according to one of claims 1 to 5 **characterised in that** the biasing force which acts on the deflection bar (6) is directed in substantially opposite relationship to the tensile stress.

7. A child seat according to one of claims 1 to 6 **characterised in that** the deflection bar (6) delimits an aperture (9) on the hook (3).

8. A child seat according to one of claims 1 to 7 **characterised in that** the deflection bar (6) is part of an eye (11) which is supported displaceably on the hook (3) and through which the upper restraining belt (2) is guided.

## Revendications

1. Siège pour enfant pour un véhicule automobile, ayant une sangle de retenue (2) supérieure qui a un crochet (3), lequel est mis en prise avec un point d'arrêt (4) fixé au véhicule, **caractérisé en ce que** sur le crochet (3) est prévu un dispositif d'affichage (5) qui indique que le crochet (3) est en prise, avec un effort de traction, sur le point d'arrêt (4) fixé au véhicule, le dispositif d'affichage (5) ayant un longeron de renvoi (6) monté coulissant dans un évidement (10) du crochet (3), à l'encontre d'une force de tension initiale, longeron de renvoi autour duquel est passée la sangle de retenue (2), le longeron de renvoi (6) étant coulissé à l'encontre de la force de tension initiale lors de l'engagement du crochet (3) dans le point d'arrêt (4) fixé au véhicule, pour un affichage de l'effort de traction.

2. Siège pour enfant selon la revendication 1,
**caractérisé en ce que** le dispositif d'affichage (5) fournit une indication optique ou acoustique de l'effort de traction.

3. Siège pour enfant selon la revendication 1,
**caractérisé en ce que** le dispositif d'affichage (5) a au moins un marquage de couleur (7, 8).

4. Siège pour enfant selon la revendication 1,
**caractérisé en ce que** l'effort de traction est détecté et affiché par un dispositif détecteur.

5. Siège pour enfant selon l'une des revendications 1 à 4,
**caractérisé en ce que** la force de tension initiale qui agit sur le longeron de renvoi (6) est produite par une force élastique.

6. Siège pour enfant selon l'une des revendications 1 à 5,
**caractérisé en ce que** la force de tension initiale qui agit sur le longeron de renvoi (6) est dirigée sensiblement dans le sens opposé à celui de l'effort de traction.

7. Siège pour enfant selon l'une des revendications 1 à 6,
**caractérisé en ce que** le longeron de renvoi (6) délimite une ouverture (9) ménagée sur le crochet (3).

8. Siège pour enfant selon l'une des revendications 1 à 7,
**caractérisé en ce que** le longeron de renvoi (6) fait partie d'une boucle (11) pouvant coulisser sur le crochet (3), boucle à travers laquelle est guidée la sangle de retenue (2) supérieure.
